# EUROPÄISCHE PATENTSCHRIFT

(11) **EP 1 504 244 B1**
(45) Veröffentlichungstag und Bekanntmachung des Hinweises auf die Patenterteilung: **31.10.2012**
(21) Anmeldenummer: 03725088.3
(22) Anmeldetag: 24.04.2003
(51) Int. Cl.: G01F 23/284

(54) **VERFAHREN ZUR ERMITTLUNG EINES POSITIONSKENNWERTS FÜR EINE GRENZSCHICHT EINES IN EINEM BEHÄLTER VORGEHALTENEN MEDIUMS**
METHOD FOR DETERMINING A POSITION PARAMETER FOR A BOUNDARY LAYER OF A MEDIUM CONTAINED IN A CONTAINER
PROCEDE DE DETERMINATION D'UNE CARACTERISTIQUE DE POSITION D'UNE INTERFACE D'UN MILIEU CONTENU DANS UN CONTENANT

(30) Priorität: 07.05.2002 DE 10220479
(43) Veröffentlichungstag der Anmeldung: 09.02.2005
(73) Patentinhaber: AREVA NP GmbH, 91052 Erlangen (DE)
(72) Erfinder: CONRADS, Hermann-Josef, 91074 Herzogenaurach (DE); DUBIEL, Klaus, 90451 Nürnberg (DE)
(74) Vertreter: Tergau & Walkenhorst
(86) Internationale Anmeldenummer: PCT/EP2003/004248
(87) Internationale Veröffentlichungsnummer: WO 2003/095954

(56) Entgegenhaltungen:
- US-A1- 2001 050 629
- US-B1- 6 295 018

## Beschreibung

Die Erfindung bezieht sich auf ein Verfahren zur Ermittlung eines Positionskennwerts für eine Grenzschicht eines in einem Behälter vorgehaltenen Mediums, bei dem ein elektromagnetischer Impuls einer im Behälterinnenraum angeordneten Antenne zugeführt und zeitaufgelöst eine Anzahl von über die Antenne empfangenen reflektierten Impulsen gemessen werden. Sie bezieht sich weiter auf ein Verfahren zum Betreiben einer Kernkraftwerksanlage, bei dem der Füllstand des Primärkühlmittels im Reaktordruckbehälter nach einem derartigen Konzept ermittelt wird.

Verfahren der oben genannten Art können in vielerlei industriellen Anwendungen bedeutsam sein, wenn ein in einem nicht direkt einsehbaren Behälter befindliches Medium, beispielsweise ein Betriebs- oder ein Kühlmedium, auf seinen Füllstand im Behälter hin überwacht und ggf. nachgeregelt werden soll. Des Weiteren können derartige Verfahren auch bei Anwendungen bedeutsam sein, bei denen innerhalb eines nicht einsehbaren Behälters mit der Bildung einer Grenzschicht zwischen zwei Medien, insbesondere zwischen einer Flüssigkeit und einer darüberliegenden Schicht geringerer Dichte wie beispielsweise einem Flüssigkeits-GasGemisch, zu rechnen ist. Insbesondere kommt ein derartiges Konzept beim Betrieb einer kerntechnischen Anlage oder einer Kernkraftwerks-Anlage zum Einsatz, wenn der Füllstand oder ein sonstiger Betriebsparameter innerhalb des Reaktordruckbehälters zu überwachen ist. Zur Bestimmung oder Überwachung der Position einer derartigen Grenzschicht zwischen zwei Medien oder der Position des Oberflächenpegels einer Flüssigkeit kann das sogenannte TDR-Messprinzip (time-domain-reflectometry) zum Einsatz kommen, wie es beispielsweise aus der DE19958584C1 oder aus der US 4,786,857 bekannt ist.

Ein Verfahren gamäβ dem Obirbegriff das Anspruch 1 ist brispials wrise an der US 6, 225, 018 bekannt. Beim TDR-Messprinzip wird der Effekt genutzt, dass ein in einem Antennensystem geführter elektromagnetischer Impuls teilweise reflektiert wird, wenn sich die Impedanz zwischen beispielsweise einem Zentralleiter der Antenne und einem diesen in der Art eines Koaxialkabels umgebenden Mantelleiter abrupt ändert. Eine derartige abrupte Änderung der Impedanz tritt beispielsweise dort ein, wo die solchermaßen gebildete Antenne aus einer gasförmigen Umgebung in eine Flüssigkeit eintaucht, da die Impedanz von der Kapazität zwischen Zentralleiter und Mantelleiter und somit von der dielektrischen Konstanten des den Zwischenraum zwischen Zentralleiter und Mantelleiter ausfüllenden Mediums abhängt. Ein einer derartigen, in das zu überwachende Medium getauchten Antenne zugeführter elektromagnetischer Impuls wird somit an der Oberfläche des Mediums teilweise reflektiert. Eine weitere Reflektion tritt am üblicherweise kurzgeschlossenen Antennenende ein. Da im übrigen die Ausbreitungs-geschwindigkeit des elektromagnetischen Impulses in der Antenne bekannt ist, kann die Laufzeitdifferenz zwischen dem an der Grenzschicht reflektierten Impuls und dem am Antennenende reflektierten Impuls als Maß für die Lage der Grenzschicht und somit als Mittel zur Ermittlung eines für die Lage der Grenzschicht charakteristischen Positionskennwerts herangezogen werden, wobei eine im wesentlichen proportionale Abhängigkeit zwischen Laufzeitdifferenz und Positionskennwert zugrundegelegt werden kann.

Als problematisch bei einem derartigen Konzept zur Ermittlung eines Positionskennwerts für eine Grenzschicht hat sich jedoch erwiesen, dass die vermittelten Laufzeitdifferenzen je nach vorgesehener Anwendung erheblich auch von der Temperatur und/oder der Zusammensetzung des im Behälter vorgehaltenen, zu überwachenden Mediums abhängen können, insbesondere wenn die Ausbreitungsgeschwindigkeit von diesen Parametern abhängig ist. Zwar hat sich herausgestellt, dass in einem begrenzten Temperaturbereich - etwa bei Raumtemperatur - die Laufzeitdifferenzen nur unwesentlich von der. Medientemperatur abhängen, so dass das TDR-Messprinzip für in diesem Temperaturbereich arbeitende Anwendungen vergleichsweise zuverlässig angewendet werden kann. Andererseits ist aber gerade bei Anwendungen mit vergleichsweise hohen Arbeitstemperaturen wie beispielsweise bei der Überwachung des Füllstandes in einem Reaktordruckbehälter mit einer erheblichen Abhängigkeit der ermittelten Laufzeitdifferenz von der Medientemperatur zu rechnen, so dass ein auf diesem Messprinzip beruhendes Überwachungskonzept bei möglicherweise auftretenden TemperaturSchwankungen nur noch vergleichsweise ungenau arbeitet.

Der Erfindung liegt daher die Aufgabe zugrunde, ein Verfahren zur Ermittlung eines Positionskennwerts der oben genannten Art anzugeben, das auch bei auftretenden Temperaturänderungen im zu überwachenden Medium eine besonders hohe Zuverlässigkeit bei hoher Messgenauigkeit aufweist.

Diese Aufgabe wird erfindungsgemäß gelöst durch die Merkmake das Anspruchhs 1

Die Erfindung geht dabei von der Überlegung aus, dass eine auch bei variierender Medientemperatur gleichbleibend hohe Messgenaulgkeit erreicht werden kann, indem die Auswirkungen der Temperaturveränderungen auf die ausgewerteten Parameter geeignet kompensiert werden. Eine derartige Kompensation ist ermöglicht, indem bei der Auswertung zusätzliche, für das Temperarturverhalten des Mediums charakteristische Informationen mit berücksichtigt werden. Wie sich in überraschender Weise herausgestellt hat, sind dafür geeignete Informationen über eine zusätzliche Auswertung der Amplituden der bei der Ermittlung der Laufzeitdifferenz berücksichtigten Impulse beschaffbar. Dabei liegt die Erkenntnis zugrunde, dass nicht nur die gemessenen Laufzeitdifferenzen der berücksichtigten Impulse, sondern auch deren Amplituden temperaturabhängig sind, so dass durch die Auswertung des Verhaltens der Amplituden eine geeignete Korrekturgröße für die Auswertung der Laufzeitdifferenzen ermittelt werden kann.

In zweckmäßiger Weiterbildung wird als Antwortsignal ein durch den zeitlichen Verlauf sowohl des eingestrahlten als auch der reflektierten Impulse gebildetes Signal ausgewertet.

Wie sich herausgestellt hat, kann sich eine Variation der Temperatur des im Behälter vorgehaltenen Mediums in besonderem Maße auf das Verhältnis von durch die jeweilige Grenzfläche transmittiertem zur an der jeweiligen Grenzfläche reflektiertem Anteil des einfallenden Impulses auswirken. Somit ist insbesondere das Verhältnis der Amplituden des der Grenzfläche zugeordneten ersten Impulses und des weiterhin zur Auswertung herangezogenen weiteren Impulses in besonderem Maße für einen Rückschluss auf die Medientemperatur geeignet. Vorteilhafterweise wird daher das Verhältnis der Amplituden der berücksichtigten Impulse für die Ermittlung des Positionskennwerts ausgewertet.

Als weiterer Impuls kann der ursprünglich der im Behälterinnenraum angeordneten Antenne zugeführte elektromagnetische Impuls ausgewertet werden. Bei der Auswertung dieses Impulses sind dann die zum Aufbau einer entsprechenden Messanlage verwendeten Komponenten, insbesondere die Charakteristik des Pulsgenerators, die verwendeten Leitungsstücke und ggf. eingesetzte Banddurchführungen in geeignetem Maße zu berücksichtigen. In vorteilhafter Ausgestaltung wird jedoch in der Art eines Referenzimpulses als weiterer Impuls ein dem Antennenende im Innenraum des Behälters zugeordneter reflektierter Impuls ausgewertet, so dass sowohl der erste, der Grenzfläche zugeordnete Impuls als auch der weitere ausgewertete Impuls im gleichen Maße möglichen Schwankungen von Umgebungsparametem ausgesetzt sind.

Dabei wird in weiterer vorteilhafter Ausgestaltung das zeitlich gesehen letzte Maximum im Zeit-Amplituden-Diagramm des Antwortsignals als dem Antennenende zugeordneter Impuls identifiziert.

Durch die konsequente Berücksichtigung sowohl der Laufzeitdifferenz als auch der Amplituden der jeweiligen Impulse lässt sich für eine Mehrzahl auszuwertender Parameter eine entsprechende Mehrzahl von Ausgangsgleichungen bereitstellen. Diese werden zweckmäßigerweise genutzt, um zusätzlich zu einer auch bei variierender Medientemperartur besonders genauen Bestimmung des Positionskennwerts für die Grenzschicht noch weitere, für das Medium charakteristische Parameter, wie beispielsweise dessen Dichte oder dessen Ionenkonzentration, zu ermitteln. In besonders vorteilhafter Ausgestaltung wird hierbei als sonstiger Parameter anhand der Amplitude des ersten und/oder weiteren Impulses ein Kennwert für die Medientemperatur ermittelt.

Wie sich weiterhin herausgestellt hat, sind sowohl die Abhängigkeit der Ausbreitungsgeschwindigkeit - also der Proportionalitätskonstanten zwischen Positionskennwert und Laufzeitdifferenz - als auch die Abhängigkeit der Amplituden der einzelnen Impulse von der Temperatur analytisch oder funktional vergleichsweise komplex. Eine analytische Kompensation der Temperaturabhängigkeit bei der Ermittlung des Positionskennwerts aus der ermittelten Laufzeitdifferenz durch Berücksichtigung der Impulsamplituden ist daher vergleichsweise aufwendig. Vorteilhafterweise erfolgt eine derartige Kompensation daher iterativ.

Eine derartige iterative Kompensation ist auf besonderes einfache Weise ermöglicht, indem vorteilhafterweise anhand der gemessenen Laufzeitdifferenz zwischen dem ersten und dem weiteren Impuls zunächst eine Temperaturabhängigkeit für den Positionskennwert bestimmt wird, anhand derer auf der Grundlage bereitgehaltener Erfahrungswerte eine erwartete Temperaturabhängigkeit der Amplitude des ersten oder weiteren impulses ermittelt wird. Anschließend wird zweckmäßigerweise durch Vergleich der erwarteten Temperaturabhängigkeit mit der gemessenen Amplitude des jeweiligen Impulses ein Istwert für die Temperatur des Mediums bestimmt, der der endgültigen Bestimmung des Positionskennwerts zugrunde gelegt wird. Bei der Auswertung wird die empirisch ermittelte Gleichung für die Abhängigkeit des Positionskennwerts von Temperatur und Laufzeitdifferenz mit der aktuell ermittelten Laufzeitdifferenz im gesamten Temperaturbereich ausgewertet. Der daraus gewonnene Temperaturverlauf für den Positionskennwert wird in die ebenfalls empirisch ermittelte Abhängigkeit des Amplitudenverhältnisses von Positionskennwert und Temperatur eingesetzt, so dass ein Temperaturverlauf des Amplitudenverhältnisses ermittelt werden kann. Aus diesem wird durch Vergleich mit dem tatsächlich gemessenen Amplitudenverhältnis die Medientemperatur bestimmt.

Unter Berücksichtigung dieses lediglich näherungsweise bestimmten Schätzwerts für die Position der Grenzschicht ist somit mit vergleichsweise hoher Genauigkeit ein Istwert für die Medientemperatur näherungsweise bestimmbar, der dann seinerseits für die endgültige Bestimmung des Positionskennwerts zugrunde gelegt werden kann.

Das Verfahren ist für eine Vielzahl von Anwendungen nutzbar, bei denen die Überwachung oder Auswertung einer Grenzschicht von Interesse ist. Dabei kommen auch Anwendungen in Betracht, bei denen aufgrund von Schichtbildungen im Medium mit dem Auftreten von zwei oder mehreren Grenzschichten zu rechnen ist.

In besonders vorteilhafter Weise wird das Verfahren beim Betreiben einer Kernkraftwerksanlage zur Bestimmung des Füllstandes des Primärkühlmittels in einem Reaktordruckbehälter genutzt.

Die mit der Erfindung erzielten Vorteile bestehen insbesondere darin, dass durch die Berücksichtigung nicht nur der Laufzeitdifferenz zwischen den ausgewerteten Impulsen, sondern auch der gemessenen Amplituden dieser Impulse eine besonders hohe Genauigkeit bei der Ermittlung des Positionskennwerts der Grenzschicht auch bei variierender Medientemperatur gewährleistet ist. Die zusätzlich vorgesehene Auswertung auch der Amplituden der Impulse ermöglicht dabei eine geeignete Kompensation der Temperatureinflüsse, die ansonsten die Ermittlung des Positionskennwerts aus der Laufzeitdifferenz beeinträchtigen könnten. Somit ist auch bei variierender Temperatur eine vergleichsweise genaue Bestimmung des Positionskennwerts ermöglicht, die überdies auch noch kontinuierlich, d. h. nicht gebunden an fest vergebene Positionsmarker, erfolgen kann. Durch die Berücksichtigung auch der Amplituden der Impulse ist darüber hinaus auch ohne zusätzlichen apparativen Aufwand eine aktuelle Bestimmung der Medientemperatur ermöglicht, wobei bei geeigneter Berücksichtigung einer Mehrzahl von Impulsen auch noch weitere für das Medium charakteristische Parameter wie beispielsweise dessen Dichte und/oder dessen Ionenkonzentration ermittelt werden können. Ein solchermaßen modifiziertes TDR-Messprinzip ist somit gerade für einen Einsatz in einer kerntechnischen Anlage im besonderen Maße geeignet.

Ein Ausführungsbeispiel der Erfindung wird anhand einer Zeichnung näher erläutert. Darin zeigen:
- Fig. 1: schematisch ein System zur Überwachung des Mediums in einem angeschlossenen Behälter, und
- Fig. 2a bis c: jeweils ein für eine Auswertung geeignetes Antwortsignal.

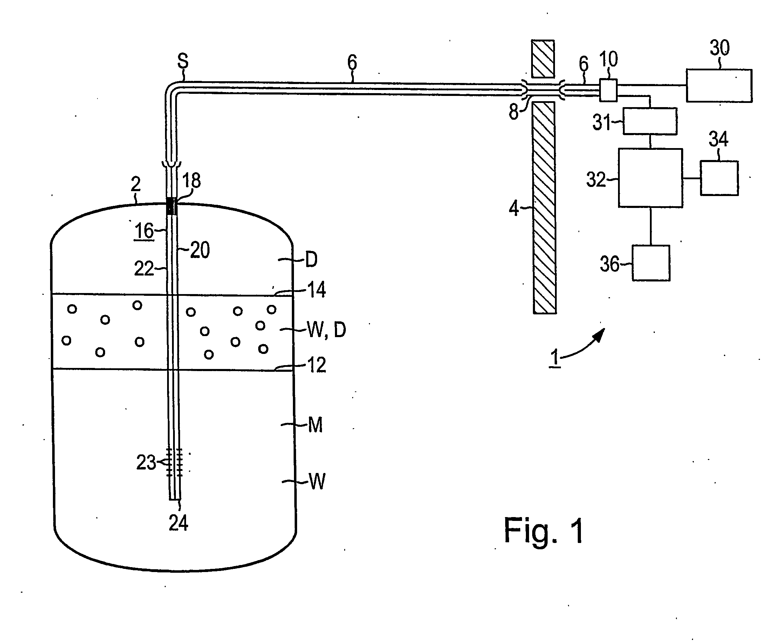

Das System 1 nach Fig. 1 ist zur Überwachung des Mediums M in einem angeschlossen Behälter 2 vorgesehen. Im Ausführungsbeispiel ist der Behälter 2 dabei ein Reaktordruckbehälter (RDB) einer kerntechnischen Anlage, der innerhalb eines geschlossen ausgeführten und in Fig. 1 lediglich andeutungsweise gezeigten Containments 4 angeordnet ist. Zum geeigneten Austausch von Signalen S ist der Behälter 2 über eine Signalleitung 6, die über eine Durchführung 8 durch das Containment 4 geführt ist, mit einer Kommunikationsschnittstelle 10 des Systems 1 verbunden.

Als Medium M ist im Ausführungsbeispiel im Behälter 2 Wasser W vorgehalten, das als Primärkühlmittel der kerntechnischen Anlage dient. In einem unteren Raumbereich liegt das Wasser W im sogenannten unterkühlten Zustand unvermischt vor. In einem darüberliegenden Raumbereich, in dem eine Beheizungswirkung der im Behälter 2 angeordneten nuklearen Brennelemente vorliegt, befindet sich hingegen ein Phasengemisch W, D zwischen Wasser W und sich darin bildenden Dampfblasen D. In einem noch weiter darüber liegenden Bereich liegt hingegen ausschließlich verdampftes Primärkühlmittel, also ausschließlich Dampf D, vor. Das im Behälter 2 vorgehaltene Medium M weist somit eine erste Grenzschicht 12 zwischen dem Wasser W und dem Phasengemisch W, D und eine zweite Grenzschicht 14 zwischen dem Phasengemisch W, D und dem Dampf D auf.

Beim Betrieb der kerntechnischen Anlage ist die Überwachung einer großen Vielzahl von Betriebsparametern vorgesehen. Unter anderem kann es dabei auch wünschenswert oder erforderlich sein, die Lage der Grenzschichten 12, 14 zu überwachen. Beispielsweise kann dabei die Überwachung der Grenzschicht 14, deren Lage auch als "swell level" bezeichnet wird, über eine Füllstandsmessung erfolgen.

Das System 1 ist zur zeitnahen Ermittlung und Überwachung von Positionskennwerten der Grenzschichten 12, 14 vorgesehen. Dazu ist das System 1 für eine Nutzung des sogenannten TDR-Messprinzips (time-domain-reflectometry) ausgestaltet. Für eine derartige TDR-Messung ist innerhalb des Behälters 2 eine in im wesentlichen senkrechter Richtung angeordnete Antenne 16 vorgesehen. Die Antenne 16, die über einen Flansch 18 mit Keramikisolator aus dem Behälter 2 herausgeführt und an die Signalleitung 6 angeschlossen ist, ist dabei in der Art einer Koaxialantenne aufgebaut. Sie umfasst einen Zentralleiter 20, der in der Art eines Koaxialkabels konzentrisch von einem im wesentlichen zylindermantelförmig ausgestalteten Mantelleiter 22 umgeben ist. Der Mantelleiter 22 ist dabei durchbrochen oder perforiert ausgeführt und weist eine Vielzahl von in der Darstellung lediglich angedeuteten Ausgleichsöffnungen 23 auf. Dadurch ist sichergestellt, dass das Medium M in den Zwischenraum zwischen Zentralleiter 20 und Mantelleiter 22 eindringen kann. Am Antennenende 24 sind der Zentralleiter 20 und der Mantelleiter 22 kurzgeschlossen.

Bei der Verwendung einer derartigen Antenne 16 zur Positionsbestimmung der Grenzschichten 12, 14 wird der Effekt genützt, däss die Impedanz der Antenne 16 lokal von der jeweiligen Kapazität zwischen Zentralleiter 20 und Mantelleiter 22 abhängt. Die Impedanz ist somit über die Kapazität abhängig von der Dielektrizitätkonstante desjenigen Mediums M, das den Zwischenraum zwischen Zentralleiter 20 und Mantelleiter 22 ausfüllt. Beim Durchtritt durch eine der Grenzschichten 12, 14 ändert sich infolgedessen die lokale Impedanz der Antenne 16 abrupt. Bei einer derartigen, abrupten Impedanzänderung wird ein in der Antenne 16 geführter elektromagnetischer Impuls teilweise transmittiert und teilweise reflektiert. Somit hinterlässt ein derartiger, in der Antenne 16 geführter elektromagnetischer Impuls an jeder Grenzschicht 12, 14 einen reflektierten Impuls, der als charakteristische Signatur auswertbar ist. Insbesondere kann die Laufzeitdifferenz zwischen einem an einer der Grenzschichten 12, 14 reflektierten Impuls und einem am Antennenende 24 reflektierten Impuls genutzt werden, um unter Berücksichtigung der Ausbreitungsgeschwindigkeit elektromagnetischer Signale im jeweiligen Segment der Antenne 16 einen Kennwert für die Position der jeweiligen Grenzschicht 12 bzw. 14 relativ zum Antennenende 24 und somit einen Kennwert beispielsweise für den Füllstand des Mediums M innerhalb des Behälters 2 zu ermitteln. Das kurzgeschlossene Antennenende 24 ergibt dabei aufgrund der besonders gravierenden Impendanzänderung eine nahezu 100-prozentige Reflektion des dort eintreffenden Restimpulses.

Um derartige Positionsbestimmungen der Grenzflächen 12, 14 nach dem TDR-Messprinzip durchführen zu können, ist das über die als abgeschirmte Leitung ausgeführte Signalleitung 6 mit der Antenne 16 verbundene System 1 mit geeigneten Komponenten ausgestattet. Insbesondere umfaßt das System 1 einen Pulsgenerator 30 zur bedarfsweisen Erzeugung eines elektromagnetischen Impulses. Der Pulsgenerator 30 ist über die Kommunikationsschnittstelle 10 mit der Signalleitung 6 verbunden, so dass ein vom Pulsgenerator 30 erzeugter elektrischer Impuls bedarfsweise der Antenne 16 zuführbar ist. Des Weiteren umfasst das System 1, eine über einen Analog-Digital-Wandler 31 an die Schnittstelle 10 angeschlossene Auswerte- und Steuereinheit 32, die einerseits mit einem Speichermodul 34 und andererseits mit einem Ausgabemodul 36, im Ausführungsbeispiel ein Bildschirm, verbunden ist. Selbstverständlich ist die Auswerte- und Steuereinheit 32 noch mit weiteren, für einen ordnungsgemäßen Betrieb erforderlichen Komponenten wie beispielsweise einer Eingabevorrichtung verbunden. Der Analog-Digital-Wandler 31 ermöglicht eine Auswertung der Meßsignale auf einem Digitalrechner.

Zur Durchführung der Bestimmung eines Positionskennwerts nach dem TDR-Prinzip wird ein im Pulsgenerator 30 erzeugter Impuls der im Innenraum des Behälters 2 angeordneten Antenne 16 zugeführt. Anschließend werden zeitaufgelöst eine Anzahl von über die Antenne 16 empfangenen reflektierten Impulsen gemessen. Dabei wird in einem durch den zeitlichen Verlauf der Impulse gebildeten Antwortsignal ein der Grenzschicht 12 oder 14 zugeordneter reflektierter Impuls identifiziert und für die Positionsbestimmung aus einer Laufzeitmessung zugrundegelegt.

Das System 1 ist für einen Betrieb ausgelegt, bei dem bei hoher Zuverlässigkeit und Genauigkeit Positionskennwerte für die Grenzschichten 12, 14 ermittelt werden können, selbst wenn sich die Temperatur des Mediums M innerhalb des Behälters 2 signifikant ändern sollte. Das System 1 ist somit besonders gerade für die Verwendung für einen Reaktordruckbehälter einer kerntechnischen Anlage geeignet, da sich bei dessen Betrieb Temperaturunterschiede selbst über den kritischen Punkt von Wasser ergeben können.

Für die Einhaltung hoher Genauigkeiten bei der Bestimmung der Positionskennwerte für die Grenzschichten 12, 14 ist beim Betrieb des Systems 1 eine geeignete Kompensation der Auswirkungen von Temperaturänderungen auf die Messwertauswertung vorgesehen. Grundsätzlich erfolgt die Ermittlung der Positionskennwerte für die Grenzschichten 12, 14 nämlich aufgrund der Erkenntnis, dass der Positionskennwert im wesentlichen proportional zur Laufzeitdifferenz eines der jeweiligen Grenzschichten 12 bzw. 14 zugeordneten, reflektierten Impulses mit einem Referenzimpuls wie beispielsweise einem am Antennenende 24 reflektierten Impuls ist. Die Proportionalitätskonstante zwischen Positionskennwert und Laufzeitdifferenz ist dabei im wesentlichen abhängig von der Ausbreitungsgeschwindigkeit elektromagnetischer Signale im jeweils betroffenen Segment der Antenne 16. Eine Verfälschung bei der Auswertung derartiger Messungen durch Temperatureffekte kann dabei jedoch eintreten, da die Ausbreitungsgeschwindigkeit innerhalb der Antenne 16 ebenfalls von der Medientemperatur abhängen kann.

Um diesen Effekt geeignet kompensieren zu können, ist zusätzlich zur Auswertung von Laufzeitdifferenzen zwischen empfangenen Impulsen auch eine quantitative Auswertung der zugehörigen Impulsamplituden vorgesehen. Dabei liegt die Erkenntnis zugrunde, dass die die Ausbreitungsgeschwindigkeit der Signale in der Antenne 16 verändernde Medientemperatur auch die Reflektion oder Transmission eines Impulses an der jeweiligen Grenzfläche 12, 14 modifiziert, so dass sich bei einer Temperaturänderung auch entsprechend veränderte Verhältnisse in den einzelnen Impulsamplituden einstellen. Daher ist beim Betrieb des System 1 eine quantitative Auswertung der Impulse sowohl hinsichtlich ihrer Laufzeitdifferenz als auch hinsichtlich ihrer Amplituden vorgesehen.

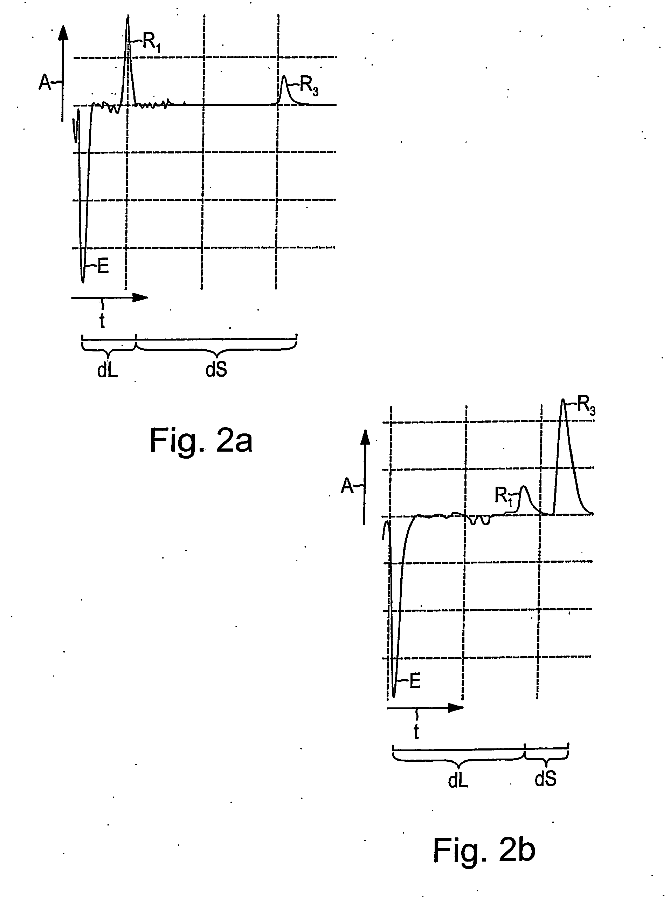

Zur weiteren Verdeutlichung der vorgesehenen Signalauswertung innerhalb der Auswerte- und Steuereinheit 32 zeigen die Figuren 2a bis c jeweils ein Beispiel für ein auszuwertendes Antwortsignal, das jeweils durch den zeitlichen Verlauf des der Antenne 16 zugeführten Impulses E und einer Anzahl von innerhalb des Behälters 2 reflektierten Impulsen Rᵢ gebildet ist. Die Antwortsignale sind dabei in den Figuren 2a bis 2c jeweils in der Art eines Amplituden- Zeit- Diagramms dargestellt. Dies ist durch die Pfeile A, t angedeutet.

Bei der Auswertung der Antwortsignale werden zunächst die festgestellten Impulse (der Antenne zugeführter Impuls E, reflektierte Impulse Rᵢ) den realen Gegebenheiten zugeordnet. Die Antwortsignale, die in Figur 2a und 2b gezeigt sind betreffen dabei Fälle, in denen im Behälter 2 lediglich eine Grenzschicht 12 oder 14 des Mediums M vorliegt. Dabei ist der zeitlich gesehen erste, mit einer negativen Amplitude A behaftete Impuls E mit dem der Antenne 16 zugeführten Impuls zu identifizieren. Der zeitlich gesehen jeweils erste reflektierte Impuls R₁ entspricht sodann einer Reflektion an der jeweiligen Grenzschicht 14 und wird für die weitere Auswertung dieser Grenzschicht 14 zugeordnet. Der zeitlich gesehen letzte reflektierte Impuls R₃ entspricht bei den Antwortsignalen nach den Figuren 2a, 2b der Reflektion am Antennenende 24 und wird somit dem Antennenende 24 zugeordnet.

Bei einer Auswertung der in den Figuren 2a, 2b gezeigten Antwortsignale, die einer Bestimmung eines Positionskennwerts für die Grenzschicht 14 und somit einer Füllstandsmessung entspricht, wird zunächst eine Laufzeitdifferenz des der Grenzschicht 14 zugeordneten ersten reflektierten Impulses R₁ mit einem der anderen Impulse E, R₃ bestimmt. Die Laufzeitdifferenz zum am der Antenne 16 zugeführten Impuls E ist dabei mit dL, die Laufzeitdifferenz zum Antennenende 24 reflektierten Impuls R₃ mit dS bezeichnet. Für die weitere Auswertung sind grundsätzlich sowohl der eingestrahlte Impuls E als auch der weitere reflektierte Impuls R₃ verwendbar; bei den weiteren Ausführungen wird lediglich beispielhaft die Verwendung des reflektierten Impulses R₂ näher erläutert.

Aus der Laufzeitdifferenz dS zwischen den reflektierten Impulsen R₁ und R₃ ergibt sich ein Positionskennwert für die Lage der dem Impuls R₁ zugeordneten Grenzschicht 14 relativ zum Antennenende 24 aus einer Proportionalität zur Laufzeitdifferenz. Die Proportionalitätskonstante ist dabei allerdings ihrerseits abhängig von der Temperatur des Mediums M, so dass sich bei Temperaturvariationen Ungenauigkeiten ergeben könnten. Um diese zu kompensieren, wird die Erkenntnis genutzt, dass auch die Amplituden der ausgewerteten Impulse R₁ und R₃ temperaturabhängig sind. Daher wird insbesondere das Verhältnis der Amplituden dieser beiden Impulse R₁ und R₃ ebenfalls mit ausgewertet. Ein Beispiel für die vorhandene Temperaturabhängigkeit des Verhältnisses dieser Amplituden ist in den Antwortsignalen nach den Figuren 2a und 2b dargestellt: das Ausführungsbeispiel nach Figur 2a zeigt nämlich ein Antwortsignal, wie es für die Grenzfläche eines Wasser- Dampf-Gemisches bei vergleichsweise niedrigen Temperaturen erhalten wird. Dabei ist der der Grenzfläche 14 zugeordnete Impuls R₁ in seiner Amplitude deutlich höher ausgeprägt als der dem Antennenende 24 zugeordnete Impuls R₃. Bei dem gegenüber deutlich erhöhten Temperaturen, wie dies als Antwortsignal im Ausführungsbeispiel nach Figur 2b gezeigt ist, liegt ein grundsätzlich anderes Verhältnis dieser Amplituden vor: in diesem Fall ist die Amplitude des der Grenzfläche 14 zugeordneten Impulses R₁ deutlich kleiner als die Amplitude des dem Antennenende 24 zugeordneten Impulses R₃. Die aus den Beispielen nach Figuren 2a, 2b erkennbare Temperaturabhängigkeit des Verhältnisses der Amplituden der Impulse R₁ und R₃ wird nunmehr zur näherungsweisen Bestimmung der tatsächlichen Medientemperatur und weiterhin zur entsprechenden Korrektur des Positionskennwertes für die Grenzschicht 14 verwendet.

Bei der Ermittlung eines verbesserten Positionskennwertes wird dabei im Ausführungsbeispiel die Erkenntnis genutzt, dass sich die Abhängigkeit des Amplitudenverhältnisses A der Impulse R₁, R₃ näherungsweise in verschiedenen Temperaturbereichen nach einer empirisch bestimmten Formel A=A(L, ρ (T)) beschreiben lässt, wobei ρ die temperaturabhängige Dichte des Mediums und L der Füllstand des Mediums M im Behälter 2 sind. Wie sich herausgestellt hat, variiert die Amplitude A des Impulses R₃ stärker mit der Temperatur als mit dem Positionskennwert für die Grenzschicht 14. Daher wird aufgrund der vergleichsweise großen Komplexität der auszuwertenden Beziehungen eine iterative Näherung vorgenommen, wobei ein lediglich näherungsweise bestimmter Ausgangswert für den Füllstand als Eingangsgröße für die Bestimmung des Amplitudenwerts herangezogen wird.

Als Ausgangswert für die folgende Iteration wird dabei zunächst aus der gemessenen Laufzeitdifferenz dS im ganzen möglichen Temperaturbereich ein Näherungswert für den Füllstand L des Mediums M im Behälter 2 nach der Beziehung L= k_{I} * dS bestimmt, wobei k_{I} ein temperaturabhängiger, empirisch bestimmter Näherungswert für die Laufgeschwindigkeit des elektromagnetischen Impulses im Medium M ist. Dieser Ausgangswert für den Füllstand L wird in die angeführte Formel für das Amplitudenverhältnis A eingesetzt, so dass ein empirisch ermittelter Amplituden-Temperatur-Verlauf bestimmt werden kann. Auf der Grundlage des so ermittelten Amplituden-Temperatur-Verlaufs wird durch Vergleich mit dem gemessenen Amplitudenverhältnis ein Temperatur-Istwert bestimmt. Aufgrund der unterschiedlichen Abhängigkeiten der genannten Formeln von Füllstand und Temperatur hat sich erwiesen, dass dieser Temperatur-Istwert für die aktuell im Behälter vorherrschende Temperartur ausreichend genau ist. Anhand des solchermaßen erhaltenen Temperatur-Istwerts wird dann aus der Beziehung L = k_{I} (T) * dS unter Zugrundelegung der für den Temperatur-Istwert ermittelten Ausbreitungsgeschwindigkeit k_{I} und der gemessenen Laufzeitdifferenz dS ein verbesserter Näherungswert für den Füllstand L bestimmt.

Die für dieses Vorgehen erforderlichen Gleichungen, Parameter, empirischen Konstanten und Erfahrungswerte sind für einen bedarfsgerechten Zugriff auf der Speichereinheit 34 geeignet hinterlegt. Die Auswerte- und Steuereinheit 32 greift daher bedarfsweise auf das Speichermodul 34 zu und gibt die erhaltenen Zwischen- und Endergebnisse auf das Ausgabemodul 36 aus.

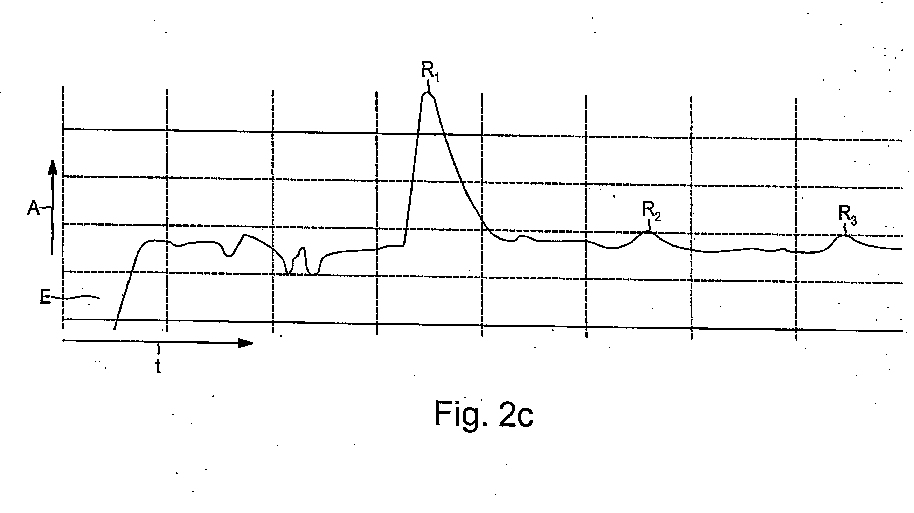

Ein mögliches Antwortsignal, wie es für ein Mehrschichtsystem mit einer Mehrzahl von Grenzschichten erhältlich ist, zeigt das Ausführungsbeispiel gemäß Figur 2c. Dabei ist erkennbar, dass zusätzlich zum eingestrahlten impuls E ein erster reflektierter Impuls R₁, ein zweiter reflektierter Impuls R₂ und ein dritter reflektierter Impuls R₃ identifizierbar sind. Analog zum oben beschriebenen Verfahren können hierbei für beide Grenzschichten Positionskennwerte ermittelt werden, wobei der erste reflektierte Impuls R₁ der am weitesten oben liegenden Grenzschicht 14, der zweite reflektierte Impuls R₂ der darunterliegenden Grenzschicht 12 und der in zeitlicher Hinsicht gesehen letzte reflektierte Impuls R₃ dem Antennenende 24 zugeordnet wird. Im übrigen können auch bei der Auswertung des Antwort des Signals nach Figur 2c die für die Auswertung auf der Amplituden vorgesehenen Maßnahmen im wesentlichen unverändert beibehalten werden.

Ein derartiges System ist auch für die Bestimmung der mittleren Dichte und/oder des Dampfvolumenanteils des Mediums besonders geeignet. Bei bekannten Stoffwerten des Mediums, insbesondere bei nach den vorstehenden Angaben ermittelter Temperatur T sowie den zu dieser Temperatur gehörigen Werten für die Dichte des fluiden und des gasförmigen Mediums, kann unter der Voraussetzung, dass die Laufstrecke zwischen Eingangssignal E und Reflektion R₁ im Gas liegt, aus der Laufzeitdifferenz dL die geometrische Lage der dem ersten reflektierten Impuls R₁ zugeordneten Grenzschicht 14 bestimmt werden. Die Laufzeitdifferenz dS zwischen dem ersten reflektierten Impuls R₁ und dem dem Antennenende 24 zugeordneten letzten reflektierten Impuls R₃ hängt jedoch von der durchlaufenen Mediumsmasse ab. Wenn es sich dabei um eine reine Flüssigkeit handeln sollte, ergibt sich hieraus ein Füllstandswert für die Flüssigkeit, der dem anhand der Laufzeitdifferenz dL ermittelten Wert gleich.

Falls die Flüssigkeit aber Gasanteile enthalten sollte, so ergibt sich aus der Auswertung der Laufzeitdifferenz dS ein Füllstand, der nur dem flüssigen Volumenanteil des Mediums entspricht und somit kleiner ist als der geometrische Abstand vom Antennenende 24 zur Oberkante des Fluid - Gas - Gemisches. Dieser so ermittelte Füllstand ist identisch mit dem sogenannten kollabierten Wasserspiegel ("collapsed level"), der ohne den Gasanteil vorhanden wäre. Aus dem Verhältnis des auch als "swell level" bezeichneten Füllstands der Oberkante des Fluid - Gas - Gemisches und dem kollabierten Wasserspiegel kann dann die mittlere Dichte des Fluid - Gas - Gemisches anhand der temperaturabhängigen Dichten des reinen Fluids und des reinen Gases ermittelt werden.

Bei Betriebsparametern des Mediums M oberhalb des kritischen Punkts von Wasser verschwinden zwar die Grenzflächen 12, 14 aus physikalischen Gründen. Dennoch ist auch in diesem Fall der dem Antennenende 24 zugeordnete reflektierte Impuls R₃ noch quantitativ auswertbar. Daraus können beispielsweise Erkenntnisse über die Temperatur oder die Dichte des überkritischen Mediums abgeleitet werden.

### Bezugszeichenliste

- 1.: System
- 2.: Behälter
- 4.: Containment
- 6.: Signalleitung
- 8.: Durchführung
- 10.: Kommunikationsschnittstelle
- 12.: Grenzschicht
- 14.: Grenzschicht
- 16.: Antenne
- 18.: Flansch
- 20.: Zentralleiter
- 22.: Mantelleiter
- 24.: Antennenende
- 30.: Pulsgenerator
- 31.: Analog-Digital-Wandler
- 32.: Steuereinheit
- 34.: Speichermodul
- 36.: Ausgabemodul

- A: Amplitude
- A,t: Amplituden-Zeit-Diagramm
- D: Dampf/ Dampfblasen
- D, W: Phasengemisch
- E: Impuls
- L: prüfstand
- M: Medium
- R₁: Impuls
- R₁,R₂,R₃: reflektierender Impuls
- S: Signale
- W: Wasser

## Patentansprüche

1. Verfahren zur Ermittlung eines Positionskennwerts für eine Grenzschicht (12,14) eines in einem Behälter vorgehaltenen Mediums (M), bei dem ein elektromagnetischer Impuls (E) einer im Behälterinnenraum angeordneten Antenne (16) zugeführt und zeitaufgelöst eine Anzahl von über die Antenne (16) empfangenen reflektierten Impulsen (R1, R2, R3) gemessen werden, wobei in einem den zeitlichen Verlauf der reflektierten Impulse (R1, R2, R3) umfassenden Antwortsignal ein der Grenzschicht (12, 14) zugeordneter reflektierter Impuls (R1, R2) identifiziert wird, und wobei der Positionskennwert näherungsweise unter Berücksichtigung der Laufzeitdifferenz zwischen dem reflektierten Impuls (R1, R2) und einem weiteren Impuls, der ein dem Antennenende (24) zugeordneter reflektierter Impuls (R3) oder der zugeführte Impuls (E) ist, bestimmt wird,
**dadurch gekennzeichnet, dass**
der so ermittelte Näherungswert zur Kompensation einer Temperaturabhängigkeit der Laufzeiten mit Hilfe der gemessenen, temperaturabhängigen Amplituden (A) dieser Impulse (E, R1, R2, R3) korrigiert wird.

2. Verfahren nach Anspruch 1, bei dem ein durch den zeitlichen Verlauf des zugeführten Impulses und der reflektierten Impulse (R1, R2, R3) gebildetes Antwortsignal ausgewertet wird.

3. Verfahren nach Anspruch 1 oder 2, bei dem das Verhältnis der Amplituden (A) der berücksichtigten Impulse ausgewertet wird.

4. Verfahren nach einem der Ansprüche 1 bis 3, bei dem als dem Antennenende (24) zugeordneter Impuls (R3) das zeitlich gesehen letzte Maximum im Zeit-Amplituden-Diagramm (A, t) des Antwortsignals identifiziert wird.

5. Verfahren nach einem der Ansprüche 1 bis 4, bei dem anhand der Amplitude (A) des ersten und/oder weiteren Impulses ein Kennwert für die Medientemperatur ermittelt wird.

6. Verfahren nach einem der Ansprüche 1 bis 5, bei dem anhand der Laufzeitdifferenz zwischen dem ersten und dem weiteren Impuls zunächst eine Temperaturabhängigkeit für den Positionskennwert bestimmt wird, anhand derer eine erwartete Temperaturabhängigkeit der Amplitude (A) des ersten oder weiteren Impulses ermittelt wird, und bei dem durch Vergleich der erwarteten Temperaturabhängigkeit mit der gemessenen Amplitude des jeweiligen Impulses ein Istwert für die Temperatur des Mediums (M) bestimmt wird, der der endgültigen Bestimmung des Positlonskennwertes zugrunde gelegt wird.

7. Verfahren zum Betreiben einer Kernkraftwerksanlage, bei dem der Füllstand des Primärkühlmittels im Reaktordruckbehälter nach einem der Ansprüche 1 bis 6 ermittelt wird

## Claims

1. A method for determining a position parameter for a boundary layer (12, 14) of a medium (M) present in a container, wherein an electromagnetic pulse (E) is supplied to an antenna (16) arranged in the interior of the container and a number of reflected pulses (R1, R2, R3) which are received by the antenna (16) are measured in a time-resolved manner, wherein a first reflected pulse (R1, R2) associated with the boundary layer (12, 14) is identified in a response signal comprising the time course of the reflected pulses (R1, R2, R3), and wherein the position parameter is determined approximately, taking into account the running-time difference between the reflected pulse (R1, R2) and another pulse, which is a reflected pulse (R3) associated with the antenna end (24) or the supplied pulse (E), **characterized in that**
the approximate value determined in this way is corrected by means of the measured temperature-dependent amplitudes (A) of these pulses (E, R1, R2, R3), to compensate a temperature dependence of the running times.

2. The method of claim 1, wherein a response signal formed by the time courses of the supplied pulse and the reflected pulses (R1, R2, R3) is evaluated.

3. The method of claim 1 or 2, wherein the ratio of the amplitudes (A) of the pulses taken into account is evaluated.

4. The method of any of claims 1 to 3, wherein the last maximum, in terms of time, in the time-amplitude diagram (A, t) of the response signal is identified as the pulse (R3) associated with the antenna end (24).

5. The method of any of claims 1 to 4, wherein a parameter for the temperature of the medium is determined by means of the amplitude (A) of the first and/or other pulse.

6. The method of any of claims 1 to 5, wherein first of all, a temperature dependence is determined for the position parameter by means of the running-time difference between the first and the other pulse, by means of which an expected temperature dependence of the amplitude (A) of the first or the other pulse is determined, and wherein, by comparing the expected temperature dependence with the measured amplitude of the respective pulse, an actual value is determined for the temperature of the medium (M), on which the definite determination of the position parameter is based.

7. A method for operating a nuclear power plant, wherein the level of the primary coolant in the reactor pressure vessel is determined according to any of claims 1 to 6.

## Revendications

1. Procédé pour déterminer un paramètre de position pour une couche limite (12, 14) d'un milieu (M) se trouvant dans un réservoir, dans lequel une impulsion électromagnétique (E) est alimentée à une antenne (16) disposée à l'intérieur du réservoir et un nombre d'impulsions réfléchies (R1, R2, R3), reçues par l'antenne (16), est mesuré d'une façon résolue dans le temps, dans lequel une première impulsion réfléchie (R1, R2) affectée à la couche limite (12, 14) est identifiée dans un signal de réponse comprenant la variation dans le temps des impulsions réfléchies (R1, R2, R3) et dans lequel le paramètre de position est déterminé approximativement, en prenant en considération la différence de temps de parcours entre l'impulsion réfléchie (R1, R2) et une autre impulsion, qui est une impulsion réfléchie (R3) affectée au bout d'antenne (24) ou l'impulsion alimentée (E),
**caractérisé en ce que**
la valeur approximative ainsi déterminée est corrigée à l'aide des amplitudes (A) mesurées, variables avec la température, de ces impulsions (E, R1, R2, R3), pour compenser une variabilité avec la température des temps de parcours.

2. Procédé selon la revendication 1, dans lequel un signal de réponse formé par les temps de parcours de l'impulsion alimentée et des impulsions réfléchies (R1, R2, R3) est évalué.

3. Procédé selon la revendication 1 ou 2, dans lequel la rapport des amplitudes (A) des impulsions prises en considération est évalué.

4. Procédé selon l'une quelconque des revendications 1 à 3, dans lequel le dernier maximum, du point de vue de temps, dans le diagramme temps-amplitude (A, t) du signal de réponse est identifié comme l'impulsion (R3) affectée au bout d'antenne (24).

5. Procédé selon l'une quelconque des revendications 1 à 4, dans lequel un paramètre pour la température du milieu est déterminé à partir de l'amplitude (A) de la première impulsion et/ou de l'autre impulsion.

6. Procédé selon l'une quelconque des revendications 1 à 5, dans lequel d'abord, une variabilité avec la température est déterminée pour le paramètre de position à partir de la différence de temps de parcours entre la première impulsion et l'autre impulsion, à partir de laquelle une variabilité attendue avec la température, de l'amplitude (A) de la première impulsion ou de l'autre impulsion est déterminée et dans lequel, par comparaison de la variabilité attendue avec la température, avec l'amplitude mesurée de l'impulsion respective, une valeur réelle est déterminée pour la température du milieu (M), qui est prise pour base de la détermination définitive du paramètre de position.

7. Procédé pour exploiter une centrale nucléaire, dans lequel le niveau du fluide de refroidissement primaire dans la cuve sous pression du réacteur est déterminé selon l'une quelconque des revendications 1 à 6.
